(19) Europäisches Patentamt

European Patent Office

Office européen des brevets

(11) Publication number: **0 222 037**
**B1**

# EUROPEAN PATENT SPECIFICATION

(12)

(45) Date of publication of the patent specification:
07.03.90

(21) Application number: 85114379.2

(22) Date of filing: 12.11.85

(51) Int. Cl.⁴: **B22D 11/16**

(54) Improved digital method for the measurement and control of liquid level in a continuous casting mold.

(43) Date of publication of application:
20.05.87 Bulletin 87/21

(45) Publication of the grant of the patent:
07.03.90 Bulletin 90/10

(84) Designated Contracting States:
AT BE CH DE FR GB IT LI LU NL SE

(56) References cited:
EP-A- 0 123 450
GB-A- 2 146 463
US-A- 3 204 460
US-A- 3 399 568
US-A- 4 306 610

(73) Proprietor: USS ENGINEERS AND CONSULTANTS, INC.,
600 Grant Street, Pittsburgh Pennsylvania 15230(US)

(72) Inventor: Mazur, Chester Charles, 1813 Educational
Drive, White Oak Pennsylvania 15131(US)

(74) Representative: Patentanwälte Grünecker, Kinkeldey,
Stockmair & Partner, Maximilianstrasse 58,
D-8000 München 22(DE)

## Description

### BACKGROUND OF THE INVENTION

The present invention relates to a method of measuring and controlling the level of an elevated temperature liquid in a container, and particularly to a method of measuring and controlling the level of molten metal in a vessel, for example, a continuous casting mold.

A system commonly used to measure the level of molten steel in a continuous caster mold utilizes a plurality of thermocouple probes located at uniformly spaced elevations on the mold wall. The probes provide electrical voltage signal outputs corresponding to the thermal profile along the mold wall caused by the liquid steel in the mold. The conventional apparatus for determining the liquid level from the probe output signals is shown in US-A 3 204 460, Milnes and US-A 3 399 568, Wilson. These recorder balance slide-wire systems have worked adequately for many years. But, recent changes in casting practices and more stringent process control requirements have established the need for changes in this equipment. Variation in the casting flux and flux buildup on the mold walls, as well as submerged tube pouring practices, have increased the problems associated with determining the level of steel in the mold. Also, false level indications sometimes occur due to sudden mold level and casting speed variations. Perhaps the most common problems are false recorder oscillation and sluggish response due to improper amplifier gain adjustments. Serious consequences can result from poor probe contact or shorted probes.

Recently, a digital method of analyzing the probe signals and determining the liquid level was devised in order to overcome the above-mentioned problems. This method is disclosed in EP-A 0 123 450. This prior digital method has been subject to spiking or jumps in the indicated level whenever the indicated level passes through a probe location. This occurs more frequently of course when the desired level in the mold happens to be located at the location of one of the probes instead of between probes. The present application is an improvement in the digital method disclosed in EP-A 0 123 450 which is designed to overcome the problems just mentioned.

### SUMMARY OF THE INVENTION

The method of the present invention is set forth in claim 1. A preferred embodiment of the invention is subject matter of claim 2.

### BRIEF DESCRIPTION OF THE DRAWINGS

Figure 1 is a plot of the electrical voltage signals of the various temperature sensing means as modified according to the method of the present invention.

Figure 2 is a schematic illustration of the preferred flow and speed control system used in the method of this invention.

### DESCRIPTION OF THE PREFERRED EMBODIMENT

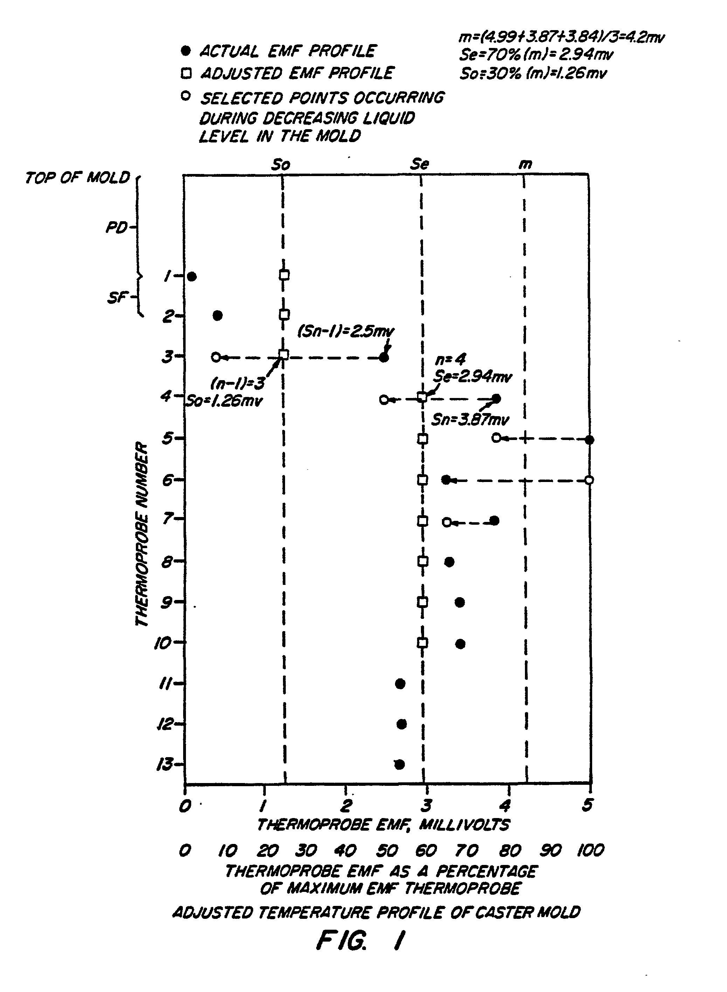

Figure 1 shows a profile of electrical voltage signals of uniformly spaced thermoprobes located on a continuous casting mold. The probes are of the type disclosed in US-A 3 797 310, Babcock and Wilson, and are located on a continuous casting mold as shown in US-A 3 204 460, Milnes and US-A 3 399 568, Wilson. The specifications of all the aforementioned patents are incorporated herein by reference. As disclosed in a prior commonly assigned application, the probe signals are converted to digital form and periodically scanned in elevation sequence from the top to the bottom of the mold. In the method of the present invention a slightly different way is used to determine the location of the uppermost probe or temperature sensing means, n, having a converted signal value, Sn, sufficient to correspond to a temperature indicative of a location below the level of steel in the mold. The preferred way of the present method is to find the average of at least one of the highest converted signal values on each scan. This value is designated, m. Desirably, m, is calculated as the arithmetic mean of the greatest three signal values on each scan. From, m, two other values are calculated herein which are used as described subsequently. First, Se, is calculated from the relation Se = p × m where, p, is a constant determined by experience and observation to yield a value corresponding to the actual level of steel in the mold. The value of, p, will generally be within a range of from about 0,50 to about 0,90. In our system, p, is equal to about 0,70. The uppermost sensing means found to have a converted signal value greater than, Se, is designated, n.

For the initial scan, another value, So, is calculated from the relation So = c × m, where, c, is a constant of value less than, p, within a range of 0 to about 0,50. In our system, c, has been initially set at 0,3. On subsequent scans, the value of, So, is adjusted so that, So, will be of a converted signal value to cause the numerator of, F, to be at or near zero immediately prior to changes in the location of the sensing means, n.

After determination of the location of sensing means, n, a fraction, F, is calculated which will determine, along with, n, the location of the measured liquid steel level, L, in the mold. F, preferably is determined from the relation,

$$F = \frac{(Sn-1) - So}{Se - So}$$

where Sn-1 is the converted signal value of the sensing means, n-1, immediately above, n. In actual practice, the profile of converted signal values is adjusted as shown in the drawing figure. The adjusted values, Se, and So, are illustrated by boxes at the various probe locations. All probes having a converted signal value greater than, Se, are set at, Se, and all probes having converted signal values less than, So, are set at, So. This expedites calculation of the measured level from the scanned profile. It will be apparent that whenever Sn-1 falls below So, F, would have a negative value. This may occur as, Sn, approaches Se, that is whenever the level of liquid steel is falling in the mold, e.g. from a level between probes 3 and 4 to a level between probes 4 and 5. Illustrative of this are open circle points on the profile shown in the drawing figure representing values during a change in level, in this case a falling level. In the figure, probe 4 is shown to have a new value Sn = 2,94. The value of, Se, as calculated from the other open circle points is 2.83 where, m, is 4,04. So, is found to be 1,21. F, then is found to have a negative value which would erroneously cause the measured level to jump about probe 4. To correct this, a new value of, So, is calculated whenever, Sn, approaches to within a predetermined percentage of Se, So, being determined by the relation, So = Sn-1. Substitution of the real-time updated value of, So, in the equation eliminates the possibility of, F, having a negative value. The proximity of, Sn, to, Se, at which this iterative calculation of So, is necessary may be determined by experience and, of course, will be related to the accuracy at which, Se, is estimated. We have found that each recalculation of, So, may only be necessary, whenever, Sn, is within the range of, Se, to 1,03 Se in our particular system. Similar adjustments in the value of, So, are necessary on a rising liquid level, i.e. whenever Sn-1 approaches the value of Sn. Thus, So, will be reset to avoid the denominator in the fraction, F, from becoming a negative value. This is accomplished by adjusting, So, to a value So = Sn-2 whenever Sn-1 approaches to within a predetermined percentage of the value of Sn. The measured level, L, is then calculated from a relation, L = [n–F–1] (SF) + PD where, SF, is the spacing between probes and, PD, is the distance of the first or highest probe in the mold from the top of the mold.

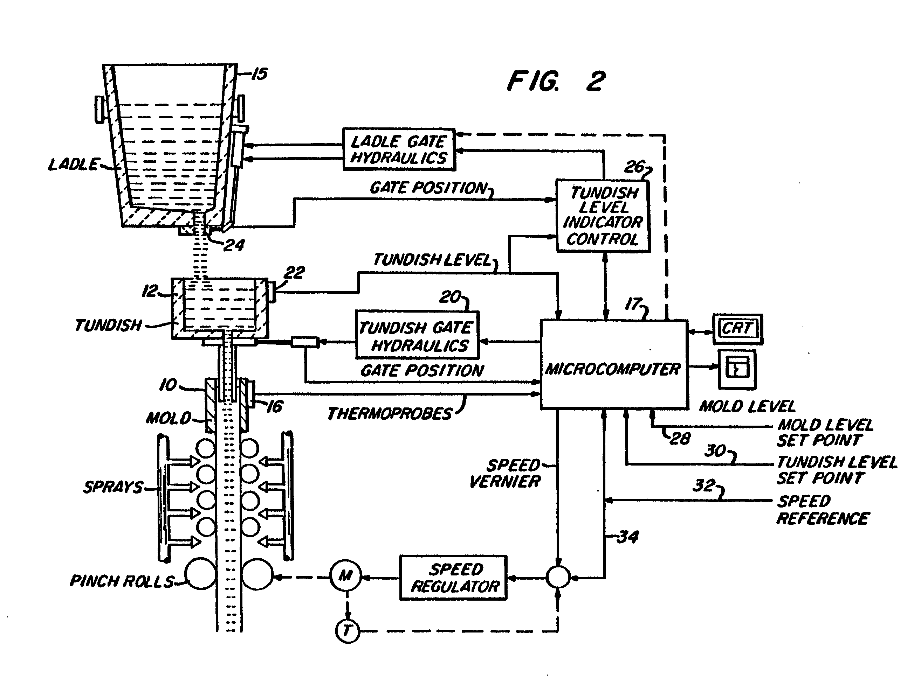

Finally, the rate of addition and withdrawal of steel to and from the mold is controlled based on the measured level of steel in the mold. For example, this may be accomplished by the method of US-A 3 300 820, Tiskus and Wilson. Figure 2 shows a preferred system for regulating the rate of steel into the mold which is another invention made by the inventors herein and will be the subject of a future commonly assigned patent application. In this method it is desired to regulate the casting speed only when the mold level exceeds a preset limit. A measure of the liquid level in the mold is obtained by the digital method just described. An error signal is developed as the difference in a voltage proportional to the measured level and a voltage proportional to the desired (setpoint) level. The error signal has a polarity deviation indicating the direction of deviation between the two. If the measured level is determined to be within predetermined limits, the system continues in a flow regulation mode, maintaining constant casting speed. In this mode a flow-control algorithm is used to calculate an output based on the sums of the proportional, integral and derivative functions of the error signal over time and a value that is proportional to the reciprocal of the square root of the change in tundish liquid level. This combined control signal is used to regulate flow rate by changing the position of a slide-gate valve on the tundish. The slide-gate valve is positioned by a hydraulic cylinder which is controlled by either a hydraulic servo valve or a pulse train which steps the cylinder to various positions.

If the mold-level error signal is greater than the deadband limits, the system begins to regulate casting speed while maintaining the tundish slide-gate device in its last position. An alarm signals the operator that speed control is now in operation. The system will not return to the flow control mode until the operator resets the flow control system based upon his clearing the apparent problem in this system. The system, preferably, also has the capability of controlling tundish liquid level by a hydraulic ladle-gate and suitable tundish liquid level measurement. An example of the latter is the Studsvik EMLI system.

Figure 2 shows the mold 10, tundish 12 and ladle 15. The mold is fitted with a plurality of thermoprobes 16 providing electrical voltage signal inputs to microcomputer 17. In addition, the computer receives input of the actual gate position, if available, from the tundish slide-gate control 20 and the tundish level measurement device 22. Similarly, the computer receives input for the actual gate position, if available, from ladle slide-gate control 24 through the tundish level indicator control 26. Various desired setpoints are fed manually, namely a mold level setpoint 28, tundish level setpoint 30 and speed reference 32. Actual speed 34 is also fed to the computer. These signals are used to control the liquid level in the mold based on the calculated measured level and the various setpoints for the system. In the event control of the level cannot be attained by movement of the ladle and tundish gates speed control is initiated to maintain the proper level.

## Claims

1. A method of measuring and controlling the level of an elevated temperature liquid in a container, said method comprising:

a) converting to digital form the electrical voltage signal outputs of a plurality of temperature sensing means located at spaced elevations on a wall of said container above and below the expected level of liquid therein, said electrical signal outputs being indicative of the temperature profile along said wall due to the liquid in the container;

b) periodically scanning the converted signals in elevation sequence;

c) determining from the scanned signals the location of the uppermost sensing means, n, having a converted signal value, Sn, of magnitude indicative of a temperature below the liquid level in the container;

d) calculating a fraction, F, of the spacing between the sensing means, n, and the next above sensing means, n-1, at which the measured liquid level lies,

e) calculating the measured liquid level from, n, and, F, with respect to their location on said container;

f) controlling addition and discharge of liquid to and from said container based on said measured liquid level, characterized by said fraction being determined by the relation

$$F = (S_{n-1}-So)/ (Se-So)$$

wherein $S_{n-1}$ is the converted signal value of the n-1 sensing means, Se is a converted signal value at a location where the liquid level is estimated to lie, Se being calculated as a function $Se = p \times m$, where p has a value withing the range 0.5 to 0.9 and m is the average of at least one of the largest converted signal values on each scan, and So is calculated as a function $So = c \times m$ on an initial scan where c has a value within the range 0 to 0.5 and is less than p; So being reset on subsequent scans at (i) Sn-1 whenever Sn falls within the range of values from Se to a value at a predetermined percentage greater than Se and (ii) Sn-2 whenever Sn falls within the range of values from Se to a value at a predetermined percentage less than Se, so as to avoid negative values of F due to changes of the level of liquid in the container.

2. The method of claim 1 further comprising setting a value Se for all sensing means having converted signal values less than So on any particular scan.

**Patentansprüche**

1. Verfahren zum Messen und Steuern des Pegels einer Flüssigkeit erhöhter Temperatur in einem Behälter, umfassend:

a) Umwandeln der elektrischen Spannungssignalausgänge einer Vielzahl von Temperaturmeßeinrichtungen, die in beabstandeten Höhen an einer Wand des Behälters oberhalb und unterhalb des erwarteten Flüssigkeitspegels darin angeordnet sind, in digitale Form, welche elektrischen Signalausgänge aufgrund der Flüssigkeit in dem Behälter für das Temperaturprofil längs der Wand kennzeichnend sind;

b) periodisches Abtasten der umgewandelten Signale in einer Höhenfolge;

c) Bestimmen aus den abgetasteten Signalen die Stelle der obersten Sensoreinrichtung n, die einen umgewandelten Signalwert Sn einer für die Temperatur kennzeichnenden Größe hat, und unter dem Flüssigkeitspegel in dem Behälter liegt;

d) Berechnen eines Bruchteils F des Abstandes zwischen der Sensoreinrichtung n und der nächst höheren Sensoreinrichtung n-1, an der der gemessene Flüssigkeitspegel liegt,

e) Berechnen des gemessenen Flüssigkeitspegels aus n und F in bezug auf seinen Ort am Behälter; und

f) Steuern der Zufuhr und des Abzugs von Flüssigkeit zu und von dem Behälter auf der Grundlage des genannten gemessenen Flüssigkeitspegels, dadurch gekennzeichnet, daß der genannte Bruchteil durch die Beziehung

$$F = (S_{n-1}-So) / (Se-So)$$

bestimmt ist, wobei $S_{n-1}$ der umgewandelte Signalwert der (n-1)-ten Sensoreinrichtung ist, Se ein umgewandelter Signalwert an einer Stelle ist, an der der Flüssigkeitspegel liegend abgeschätzt wird, Se als eine Funktion $Se = p \times m$ berechnet wird, wobei p einen Wert innerhalb des Bereiches zwischen 0,5 und 0,9 hat und m der Mittelwert von wenigstens einem der größten umgewandelten Signalwerte bei jeder Abtastung ist und So als eine Funktion $So = c \times m$ als ein anfänglicher Abtastwert berechnet wird, wobei c einen Wert innerhalb des Bereiches von 0 bis 0,5 hat und kleiner als p ist; So bei nachfolgenden Abtastungen auf (i) Sn-1 rückgesetzt wird, immer wenn Sn in den Wertebereich für Se bis zu einem Wert bei einem vorbestimmten Prozentsatz größer als Se fällt und auf (ii) Sn-2 rückgesetzt wird, immer wenn Sn in den Wertebereich von Se bis zu einem Wert bei einem vorbestimmten Prozentsatz kleiner als Se fällt, um negative Werte in F aufgrund Schwankungen des Flüssigkeitspegels im Behälter zu vermeiden.

2. Verfahren nach Anspruch 1, weiterhin enthaltend das Vorgeben eines Wertes Se für alle Sensoreinrichtungen, die umgewandelte Signalwerte haben, die kleiner als So bei jeder einzelnen Abtastung sind.

**Revendications**

1. Procédé pour mesurer et commander le niveau d'un liquide de température élevée dans un récipient, ledit procédé comportant:

a) convertir sous forme numérique les signaux de tension électrique d'une pluralité de moyens de détection de la température placés à des niveaux espacés l'un de l'autre sur une paroi dudit récipient, au-dessus et en dessous du niveau attendu du liquide dans le récipient, lesdits signaux électriques étant indicatifs du profil, le long de ladite paroi, de la température due au liquide contenu dans le récipient;

b) balayer périodiquement les signaux convertis dans la séquence correspondant aux niveaux;

c) à partir des signaux ainsi balayés, déterminer la position du moyen de détection le plus haut, n, dont le signal converti, Sn, a une valeur indicative d'une température inférieure à celle règnant au niveau du liquide dans le récipient;

d) calculer la fraction de distance, F, entre le moyen de détection n et le moyen de détection situé immédiatement au-dessus, n-1, à laquelle se trouve le niveau du liquide mesuré;

e) à partir de n et F, calculer le niveau du liquide mesuré, rapporté à son emplacement sur ledit récipient; et

f) commander l'appoint de liquide dans ledit récipient et sa sortie hors dudit récipient sur la base dudit niveau de liquide mesuré, caractérisé en ce que ladite fraction est déterminée par la relation

$$F = (S_{n-1}-So)/ (Se-So)$$

où $S_{n-1}$ est la valeur du signal converti du moyen de détection d'ordre n-1, Se est une valeur du signal converti à une position où l'on estime que se trouve le niveau du liquide, Se étant calculé comme fonction $Se = p \times m$, où p a une valeur située sur la plage de 0,5 à 0,9 et m est la moyenne d'au moins une des valeurs les plus grandes du signal converti lors de chaque balayage, et So se calcule comme fonction $So = c \times m$ lors d'un balayage initial où c a une valeur située sur la plage 0 à 0,5 et inférieure à p; So reprenant, lors des balayages ultérieurs, la valeur (i) $S_{n-1}$ chaque fois que Sn tombe sur la plage de valeurs allant de Se à une valeur supérieure à Se d'un pourcentage prédéterminé et (ii) $S_{n-2}$ chaque fois que Sn tombe sur la plage de valeurs allant de Se à une valeur inférieure à Se d'un pourcentage prédéterminé, de façon à éviter des valeurs négatives de F dues aux changements du niveau du liquide dans le récipient.

2. Procédé selon la revendication 1, comportant en outre le fait de prendre une valeur Se pour tous les moyens de détection dont les valeurs du signal converti sont inférieures à So lors de tout balayage particulier.

EP 0 222 037 B1

ADJUSTED TEMPERATURE PROFILE OF CASTER MOLD

FIG. 1

FIG. 2

EP 0 222 037 B1